# EUROPEAN PATENT APPLICATION

(11) **EP 4 760 504 A1**
(43) Date of publication of application: **17.06.2026**
(21) Application number: 24307078.6
(22) Date of filing: 11.12.2024
(51) Int. Cl.: G06F 9/46, G06F 9/48

(54) **METHOD AND SYSTEM FOR INTERRUPTING PROCESSES FROM A PCIE DEVICE**

(71) Applicant: BULL SAS, 78340 Les Clayes-Sous-Bois (FR); Institut National de Recherche en Informatique et en Automatique, 78150 Le Chesnay-Rocquencourt (FR)
(72) Inventor: BARBE, Mathieu, 38170 Seyssinet Pariset (FR); GOEDEFROIT, Charles, 33600 Pessac (FR); PICHON, Grégoire, 38180 Seyssins (FR); DENIS, Alexandre, 33400 Talence (FR)
(74) Representative: Cabinet Camus Lebkiri

(57) **Abstract**

The invention concerns a method (2) for interrupting a user process (A) in a high-performance computer comprising at least one compute node comprising at least a processor (11) to execute the user process (A), at least one IOMMU (12) and at least one PCIe device (13), the method (2) comprising
- allocating (21) a memory region to store a union of structures, the union of structures comprising a Posted-Interrupt Descriptor "PID" structure and a User Posted-Interrupt Descriptor "UPID" structure wherein the IOMMU uses the PID structure and the processor uses the UPID structure;
- Configuring (24) the IOMMU (12) with a remapping interrupt table (IRT) comprising associating an entry of the IRT with an address of the memory region of the union of structures;
- interrupting (29), by the processor (11), the user process (A) using the registered interrupt handler of the UPID structure.

## Description

### TECHNICAL FIELD

The technical field of the invention is the field of computer system interrupt management.

The present document concerns a method and system for interrupting processes using a PCle device, and in particular for transforming hardware interrupts into user-level process interrupts.

### STATE OF THE ART

High Performance Computing (HPC) requires high bandwidth, low latency interconnect network communications. It uses specialized hardware, such as network switches and NICs (Network Interface Controllers) and their associated software stacks.

The NIC software stacks are based on asynchronous communication libraries with an Operating System bypass, also known as "OS-bypass", and zero-copy transfers, allowing efficient communications directly from user space. An OS-bypass is the ability for the NIC to exploit a hardware device without going through the Operating System. Zero-copy transfers refers to the transport of data between memory areas accomplished without the processor having to copy the data, thereby improving efficiency and performance.

Asynchronous communications rely on network events generated by a hardware device to notify a program executed on a CPU of message reception or message transmission completion.

To perform network communications, a program initiates a network library which comprises programming functions related to network communications. The programming functions can for example include sending and receiving data packets, managing network protocols, and setting up connections, among other tasks. An example of a network library is the ibverbs library, which permits user-space processes to use RDMA (Remote Direct Memory Access) "verbs" to perform high-throughput, low-latency network operations. This library performs os-bypass and works with asynchronous calls and events but requires explicit progress calls. Currently, it is not possible to handle network events without making explicit calls to the network library, which prevents the parallel execution of computing and network event handling.

Furthermore, when the program waits for a network event to continue its computing, the network library polls for it, doing active spinning on network event availability. This is performed by continuously reading a host memory. This active spinning wastes CPU (central processing unit) cycles since repeated memory reads do not contribute to the useful computation of the program, and this globally impacts power consumption and degrades the Flops/Watt ratio. The Flopp/Watt ratio is an important criterion of the Green 500 high-performance computers ranking.

There is also a need for improved reactivity of the network library, that is a better interleaving between computing and communication.

To avoid these issues, it is possible to use a dedicated thread on an alternate core of the CPU to handle network events and help network communication progress independently of the compute program. The progress thread uses a dedicated core, which presents the issue of reducing the number of cores of the CPU available for computing.

Another solution is to use hardware interrupts. Hardware interrupts are frequently used in computer to notify the operating system of asynchronous network events originating from hardware devices. An issue is that hardware interrupts are currently limited to kernel space, since hardware management is exclusively handled by the Operating System. Waking up from kernel space does not offer enough performance due to the cost of the switch of context space from kernel context to user context. The latency of such a context switch is of the order of the microsecond which is too expensive considering the fact that the latency of NIC-to-NIC communication is of the same order (around 1 microsecond).

Finally, a solution proposed by Intel is to use a user-level interrupt. User-level interrupts allow applications to handle events directly without transitioning to the kernel mode, reducing latency by avoiding costly mode switches. However, they have limitations, such as the inability to be triggered directly by hardware, which can increase latency and add software complexity. These interrupts are often used to enhance application efficiency by lowering power consumption and optimizing processor resource use, though they require specific operating system support to be fully effective.

There is therefore a need for a solution enabling a hardware device to notify a program of incoming network communications without presenting the drawbacks of the state of the art.

### SUMMARY OF THE INVENTION

The present invention solves the above-mentioned problems by providing a solution for a hardware device to notify an executed process of new events without having to pass through the kernel space.

According to a first aspect of the invention, this is satisfied by providing a method for interrupting a user process in a computer, the method being performed by the computer, the computer comprising at least a processor to execute the user process, at least one Peripheral Component Interconnect Express "PCIe" device and at least one Input/Output Memory Management Unit "IOMMU", the method comprising:
- Allocating a memory region to store a union of structures, the union of structures comprising a Posted-Interrupt Descriptor "PID" structure and a User Posted-Interrupt Descriptor "UPID" structure, an entry of the PID structure being associated with the processor and corresponding to an interrupt vector;
- Executing by the processor, the user process;
- Registering, by the user process, a user interrupt handler,
- Configuring the IOMMU with a remapping interrupt table comprising associating an entry of the remapping interrupt table with an address of the memory region of the union of structures and with an index of said union of structures;
- sending a hardware interrupt request towards the processor by the PCle device upon occurrence of an event, the hardware interrupt request being associated with the entry of the remapping interrupt table;
- receiving, by the IOMMU, the hardware interrupt request and accessing the corresponding entry in the remapping interrupt table to access the PID structure of the union of structures and retrieve the interrupt vector;
- sending, by the IOMMU towards the processor, an interrupt request comprising the retrieved interrupt vector,
- receiving, by the processor the interrupt request, matching the interrupt vector with the UPID structure of the union of structures and interrupting, by the processor, the user process using the registered interrupt handler of the UPID structure.

Thanks to the invention, a new event can be notified and handled by a user process executed on a processor without relying on the operating system of the processor. This is permitted by the use of user-level process interrupts. The invention enables a PCle device to launch a hardware interrupt towards an IOMMU, which "converts" the hardware interrupt into a user-level interrupt, thanks to the use of an union of the PID and UPID structures. This way, events such as network events received by network interface cards can be handled directly by the user process, on the same core as the user process, interleaved with the performed computation and without a dedicated progress thread. This permits also to remove network event busy waiting and provides an optimized way to wait for a user interrupt with reduced power consumption, as user-level process interrupt is low-latency notification mechanism.

The method according to the invention may also have one or more of the following characteristics, considered individually or according to any technically possible combinations thereof:
- the index of said union of structures comprised in the interrupt remapping table of the IOMMU corresponds to a field of the PID structure of the union of structures and to a field of the UPID structure of the union of structures.
- The method further comprises assigning the interrupt specified in the selected entry of the interrupt remapping table to the PCle device.
- each of the PID structure and UPID structure of the union of structures comprises an outstanding notification field, the method comprising:
   - Setting the outstanding notification field in the PID structure, by the IOMMU, after retrieving the interrupt vector, indicating that a hardware interrupt is pending.
- The method further comprises resetting, by the processor, the outstanding notification field in the UPID structure of the union of structures upon using the registered interrupt handler of the UPID structure.
- The method further comprises resetting the outstanding notification field in the PID structure of the union of structures upon completion of the interrupt handling by the user process.
- resetting the outstanding notification field in the PID structure of the union of structures comprises using a system call by the user process.
- resetting the outstanding notification field in the PID structure comprises mapping the PID structure of the union of structures into the address space of the user process and resetting the outstanding notification field in the PID structure by the user process.
- resetting the outstanding notification field in the PID structure comprises using a hardware mechanism of the PCle device.
- the PID structure comprises a target processor field specifying the processor.

Another aspect of the invention relates to a system configured to implement the method according to the invention, the system comprising at least:
- a device comprising:
   - the PCle device,
   - the processor,
   - a memory,
   - an IOMMU,
- the PCle device (13) and the IOMMU being communicatively coupled to transmit at least the hardware interrupt request,
- the processor and the IOMMU being communicatively coupled to transmit at least the user-level interrupt request.

In an embodiment, the PCle device is a network interface card and the event is a network event.

In a preferred embodiment, the system is a high-performance computer comprising at least one cabinet and wherein the device comprising the first processor and the first memory is a compute node comprised in a compute blade comprised in the at least one cabinet.

Another aspect of the invention relates to a computer program product comprising instructions which, when the program is executed by the system according to the invention, cause the system to carry out the method according to the invention.

Another aspect of the invention relates to a computer-readable medium having stored thereon the computer program product of the invention.

The invention finds a particular interest in high-performance computers performing computations for transmitting network communications between compute processors via network interface cards.

### BRIEF DESCRIPTION OF THE FIGURES

Other characteristics and advantages of the invention will become clear from the description that is given thereof below, by way of indication and in no way limiting, with reference to the appended figures, among which:
- Figure 1 is a schematic representation of a system configured to implement a method according to the invention,
- Figure 2 is a schematic representation of a method according to the invention,
- Figure 3 is a schematic representation of a union of structures according to the invention,
- Figure 4 is a schematic representation of an execution of the method according to the invention,
- Figure 5 is a schematic representation of a comparison of the execution of processes in the state of the art and in the invention.

### DETAILED DESCRIPTION

For greater clarity, identical or similar elements are marked by identical reference signs in all of the figures.

The invention is a method for interrupting, by a PCle device, an application executed by a processor. The interrupt is performed using a user-level process interrupt such as the "uintr" interrupt mechanism introduced by Intel^{®}. In the following description, an example of implementation in a high-performance computer is taken, but the invention can be implemented by any PCle device using any PCle device able to use the MSI-X extension of the Message Signaled Interrupts.

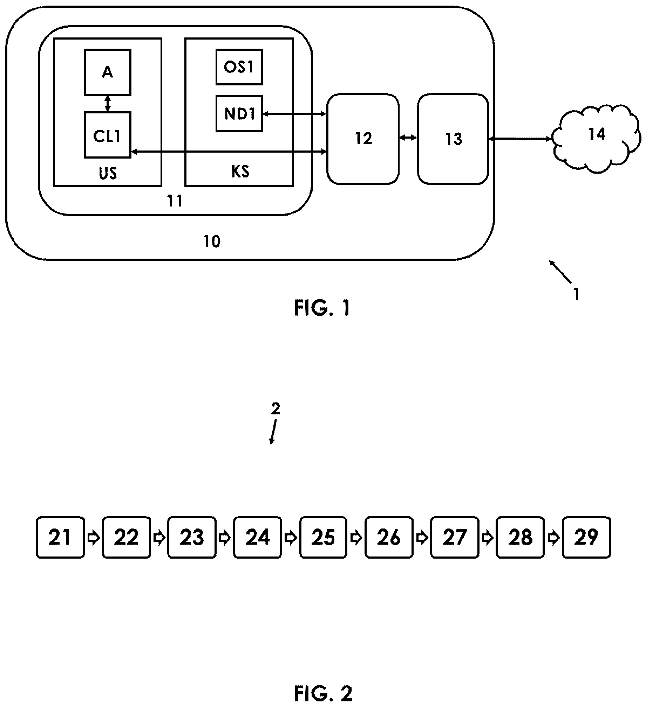

Figure 1 is a schematic representation of an embodiment of a system according to the invention.

The system 1 represented in Figure 1 comprises a compute node 10 connected to a network 14. The compute node 10 can be comprised in a compute blade (not shown) of a high-performance computer (not shown). Such a compute blade is comprised in a cabinet of the high-performance computer. A high-performance computer can comprise several cabinets, each cabinet comprising one or more compute blades and/or one or more storage blades, the cabinets being linked via a high-bandwidth, low-latency network. A compute blade preferably comprises several compute nodes 10.

The compute node 10 comprises a couple processor-memory 11. The processor and memory are shown on the figures as a single element for clarity purposes. The compute node 10 comprises a processor and a memory communicatively coupled, so that the memory can store instructions and the processor can execute said instructions by accessing the memory. The reference "11" refers to the processor or the memory or the couple processor/memory in the rest of the description. A processor is a device able to perform computations. When the instructions stored by the memory are executed by the processor, the processor performs the actions defined in the instructions. Examples of such actions are computations, and, in particular in high-performance computers, intensive computations, such as weather or simulation.

The compute node 10 further comprises a PCle device 13. "PCIe", or "Peripheral Component Interconnect Express", is a high-speed interface standard used to connect various hardware components within a computer, such as graphics cards, network cards, and storage devices. It operates over a PCle bus using a point-to-point architecture, which allows for direct communication between devices, reducing latency and increasing data transfer efficiency. Each PCle connection, known as a "lane", comprises two pairs of wires for transmitting and receiving data, enabling simultaneous bidirectional communication. PCle supports multiple lanes, typically ranging from one to sixteen, allowing for scalable bandwidth to meet the needs of different devices. The PCIe standard uses a packet-based protocol and is backward compatible with older PCI standards, allowing for integration with existing systems. The PCle device 13 represented in Figure 1 is a network interface card also referred to as a "NIC". The network interface card 13 permits to communicate via the network 14, for example with another compute node 10, comprised in the same compute blade or not, and/or comprised in the same cabinet or not. As previously mentioned, the invention does not only work with network interface cards, but works with any PCle device 13 able to use the MSI-X extension of the Message Signaled Interrupts, also called "MSI". MSI is a method used by PCI and PCle devices to communicate interrupt requests to a processor. Unlike traditional interrupt methods that use dedicated physical lines, MSI allows devices to send interrupt signals as in-band messages over the PCI/PCIe bus. In MSI, the sending device writes a specific data value to a designated memory address, which the processor interprets as an interrupt request.

The compute node 10 also comprises an Input/output Memory Management Unit 12, also called "IOMMU". When manufactured by Intel^{®}, IOMMUs are part of Intel VT-d^{®} (Virtualization Technology for Directed I/O). An IOMMU is a hardware component positioned between the processor 11 and PCle devices to manage memory access and handle interruptions. It provides address translation and access control, allowing devices to safely and efficiently access the system memory. By isolating device memory access, the IOMMU enhances system security and stability, preventing unauthorized access and potential data corruption. It also supports features like device virtualization, enabling multiple virtual machines to share hardware resources. The IOMMU can manage interrupts by redirecting interrupts generated by devices to the appropriate system, preventing them from being directly addressed to the host system. When a PCle device generates an interrupt, the IOMMU intercepts it and checks the destination address through a translation table to ensure it complies with configured access and security rules.

The couple processor/memory 11 comprises a user space US and a kernel space KS. The memory comprises a "user" area reserved for the user space and a "kernel" area reserved for the kernel space. The user space is used to store and run user-level programs, for example the user process A and a communication library CL1. The kernel space KS runs an operating system OS1 kernel and several device drivers, such as network driver ND1 when the PCle device is a network interface card. To execute the user process A, the processor 11 executes instructions stored by the memory in the user space.

The user process A has access to a limited part of the kernel space KS using "system calls". System calls are predefined functions permitting to perform actions with the operating system.

The method according to the invention is performed by the system 1. The method 2 according to the invention is represented schematically in Figure 2.

The method 2 permits to interrupt the user process A executed by the processor 11 in user space US using the PCle device 13. Interrupting a process is stopping its normal execution to perform different operations. For example, if the "normal" execution of the user process A by the processor 11 leads the processor 11 to perform computing, interrupting the user process A can comprise stopping the computing to perform networking operations.

First, an initialization phase needs to be performed to set up the necessary hardware and software configurations. This includes configuring an IOMMU with a remapping interrupt table, allocating memory for a union of a PID structure and a UPID structure, and registering a user interrupt handler. These steps ensure that the system is prepared to handle user interrupts.

The method 2 comprises a first step 21, performed by the operating system kernel, of allocating a memory region of the processor 11 to store a union of structures U1, which in itself is a structure. The memory region is a system memory of the compute node 10, for example in the Random-Access Memory "RAM".

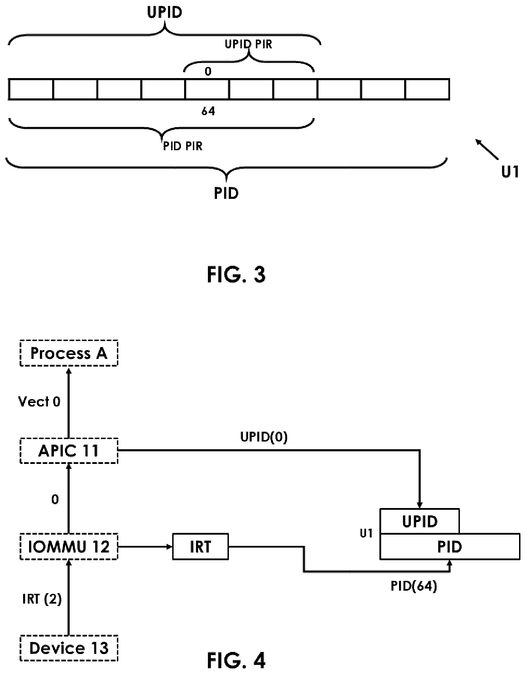

An example of a union of structures is represented in Figure 3. The union of structures U1 comprises a Posted-Interrupt Descriptor "PID" structure and a User Posted-Interrupt Descriptor "UPID" structure. In the union U1, the UPID structure and the PID structure overlap each other. That is, a same memory address stores a unique value but can correspond to both a field in the PID structure and a field in the UPID structure, for the overlapping fields. In a preferred embodiment, in the union U1, the UPID structure overlaps the first fields of the PID structure, as represented in Figure 3. The PID and UPID structures are defined by the Intel^{®} x86 specification. The PID (Posted-Interrupt Descriptor) structure is used to manage hardware interrupts, while the UPID (User Posted-Interrupt Descriptor) structure is used to manage user-level interrupts. In the invention, part of the PID structure is used by the IOMMU 12, which manages hardware interrupts, and the UPID structure (which takes several fields of the PID structure) is used by the processor 11, which manages user-level interrupts. For example, a memory region of 512 bytes can be allocated to the union U1.

In the first step 21, the PID structure of the union U1 is populated with an identifier of the first processor. To do so, the Operating System fills the field "Notification destination Target physical APIC ID" of the PID structure of the union of structures with the current core number or an identifier of the processor 11 executing the user process A, which will enable the manager of the interrupt, that is, the processor 11, to know on which core or on which processor the user process to interrupt runs. This field permits the IOMMU 12 to reach the Advanced Programmable Interrupt Controller "APIC" of the processor 11, for it to raise the interruption. This field is at the end of the PID structure and is therefore not occupied by the UPID structure.

The method 2 comprises a step 22 of executing the user process A, by the processor 11 of the compute node 10. The user process A is preferably part of a larger computer program comprising a plurality of processes distributed across compute nodes in the high-performance computer comprising the compute node 10. In said computer program, the processes need to communicate via the network 14. When a process tries to communicate with the user process A, it sends data, via its network interface, to the network interface card 13 of the compute node 10. The network interface card 13 in turn generates a network event destined to the processor 11 of the compute node 10. The invention is not limited to processing network events, as will be explained later.

The method 2 then comprises a step 23 of registering, by the user process A executed by the processor 11 of the compute node 10, a handler for processing events with the kernel of the operating system OS1 of the processor 11 of the compute node 10.

The registering 23 of the handler comprises the user process A calling a predefined system call with the handler to call when receiving a user-level process interrupt and optionally with an alternative stack or a size of the space to use under the current stack when calling the handler. The hander to call is also called a callback routine. The handler can be specified using its address. The received user-level process interrupt is for example the "uintr" mechanism from Intel^{®} and the predefined system call (syscall) is for example uintr_register_handler(2).

In the prior art, the Operating System then processes the syscall by carrying out the following steps:
- Allocating a UPID structure (for User Posted-Interrupt Descriptor as defined in the x86 specification). The Operating System especially fills the field "Notification destination Target physical APIC ID" of the UPID structure with the current core number, which will enable the emitter of the user-level process interrupt to know on which core the user process to interrupt runs.
- Writing of the address of the UPID structure in the model-specific register IA32_UINTR_PD;
- Writing of the address of the user handler in the model-specific register IA32_UINTR_HANDLER;
- Adding in the model-specific register IA32_UINTR_STACKADJUST if an alternative stack has to be used or if an offset must be apply to the current stack pointer;
- Indicate in the UINV values field of the model-specific register IA32_UINTR_MISC the number of the interrupt vector which will be used to trigger the user interrupt.

In the present invention, the UPID structure is part of the union U1, already allocated. Therefore, in the invention, the Operating System then processes the syscall to register the handler by carrying out the following steps:
- Writing of the address of the union of structures U1 (that is, the address of the allocated memory region) in the model-specific register IA32_UINTR_PD;
- Writing of the address of the interrupt handler in the model-specific register IA32_UINTR_HANDLER, wherein the interrupt handler is stored in a memory region of the kernel space KS;
- Adding in the model-specific register IA32_UINTR_STACKADJUST if an alternative stack has to be used or if an offset must be apply to the current stack pointer;
- Indicate in the UINV values field of the model-specific register IA32_UINTR_MISC the number of the interrupt vector which will be used to trigger the user interrupt.
- The same number of the interrupt vector must be entered in the "Notification Vector" field of the PID structure in the union U1. This field will be used by the IOMMU 12 to specify the number of the interrupt vector to use by the APIC of the processor 11.

A handler is a programming function comprising instructions to execute when a particular event occurs. The handler is stored in a memory region of the user space US. In the case of the present invention, the handler is to be executed when receiving a user-level process interrupt, and will be executed when interrupting the user process A as a result of receiving said user-level process interrupt. For example, in the present invention, the handler can access a specific memory buffer where the data related to the network event is temporarily stored, wherein the data related to the network event comes from the network interface card 13, and inform the computation program, for example the user process A, that data is available for an upcoming computation phase. The handler could also be programmed to initiate new network communications in response to receiving data.

The registering of the handler also comprises creating an interrupt execution context in user space US for the processor 11 to run the handler. An interrupt execution context is a context to which the user process A will be jumped to when receiving a user-level process interrupt. The handler will then be called (executed) in said interrupt execution context. After the interrupt has been handled by the user process A, the user process A will be jumped back to its original execution context. To create a specific interrupt context, a specific function and optionally alternate stack can be created. An "alternate" stack is a call stack different from the call stack used in the original execution of the user process A by the processor 11, that is when the user process A is performing computing.

The method 2 comprises a fourth step 24 of configuring the IOMMU 12 with an interrupt remapping table. This table is used to map hardware interrupts to user-level interrupts. Preferably, the IOMMU 12 is an Intel VT-d^{®} IOMMU. This "Interrupt Remapping Table" contains a specific entry for each remapped interrupt, and each entry is called an IRTE, or "IRT Entry." The format of the entries is specified in the Intel VT-d standard. This table must be initialized to zero.

Once the interrupt remapping table is initialized to zero, the base address of the interrupt remapping table must be written in the IRTA field ("Interrupt Remap Table Address") of the IRTA register of the IOMMU 12. The EIME field ("Extended Interrupt Mode Enable") of the IRTA register must also be configured in x2APIC mode, to allow managing a larger number of processors with reduced latency and improved performance by using memory-mapped registers instead of I/O-mapped registers for APIC access. The size of the IRT must be specified in the S field ("Size") of the IRTA register, and interrupt remapping at the IOMMU 12 level must be enabled using the IRE bit ("Interrupt Remapping Enable") of the model-specific register GCMD ("Global Command"). Finally, for the interrupt remapping table to be taken into account by the IOMMU 12, the SIRPT bit ("Set Interrupt Remap Table Pointer") in the model-specific register GCMD must be activated.

The fourth step 24 also comprises mapping a hardware interrupt with the initialized user-level interrupt to which corresponds the interrupt vector and the interrupt handler. To do so, an entry of the interrupt remapping table ("IRT") is associated with an address of the memory region of the union of structures U1 and a user vector is associated with said entry. This comprises the following steps:
- Select a free IRT entry in the interrupt remapping table;
- Activate the P field ("Present") of said selected entry;
- The IM field ("IRTE mode") of the selected entry must be set to "Posted" mode;
- The VV field ("Virtual Vector") of the selected entry is used to specify a user vector number.
- Write the address of the union of structures U1 allocated in step 21 into the PDA field ("Posted Descriptor Address") of the selected entry.

Thanks to this initialization, the IOMMU 12, reading the IRT entry of the interrupt remapping table IRT, will reach the union of structures U1 believing that said structure U1 is a PID structure, as the PDA field of the interrupt remapping table should mention a PID structure, and the Virtual Vector field should link to an index of the PID structure corresponding to a hardware interruption. The value of the Virtual Vector field should then be chosen between 64 and 127 to only link to indexes of the U1 structure corresponding to PIR (Posted-interrupt request) fields (i.e. to user vector numbers) of the PID structure which also correspond to PIR fields of the UPID structure. For example, the value 64 can be used. The index 64 of the union of structures U1 corresponds to the virtual interrupt vector 64 of the PID structure of the union of structures U1, and corresponds to the user vector 0 (first PIR field) of the UPID structure of the union of structure U1 as the PIR (Posted-interrupt request) starts at index 64 and ends at index 127 in the UPID structure, and the PIR starts at index 0 and ends at index 255 in the PID structure. It is therefore necessary to use fields of the union of structures U1 that refer to a PIR field in both UPID and PID structures of the union U1 of structures.

The meaning of the read bit then depends on its context of usage: if the bit located at index 64 of the union of structure U1 is read by the IOMMU 12, the retrieved vector will be the virtual interrupt vector 64 of the PID structure (i.e. to the 64^{th} PIR field of the PID structure), as the IOMMU 12 will believe it reads a PID structure. Later, when the union of structure U1 will be read by the APIC of the processor 11, the index 64 will correspond to user vector 0 (i.e. to the 1^{st} PIR field of the UPID structure) of the UPID structure, as the APIC of the processor 11 will believe it reads a UPID structure. The UPID structure is 16 bytes, and the PID structure is 64 bytes, and both structures start at the same address in the union of structures U1. It is to be noted that different user vector numbers could be useful to differentiate various interrupt sources. It is important to distinguish between a user vector and an interrupt vector. An interrupt vector is a vector which, when received by the process, causes the process to be interrupted. A user vector is an additional information, for example information regarding the interrupt source, as the user vector corresponds to an entry from the IRT table, which maps hardware interrupts with user-level interrupts. Therefore, a single interrupt vector can be used with various different user vectors, as a function of the interrupt source.

Once the interrupt remapping table IRT of the IOMMU 12 has been configured, the interrupt specified in the selected entry of the interrupt remapping table IRT has to be assigned on the PCle device 13 in a step 25. To do so, the following steps are performed:
- First, the driver of the PCle device 13 selects a free entry in its MSI-X (Message Signaled Interrupts - eXtended) table. This entry will be used by the device to raise an interrupt to the IOMMU 12.
- This entry must conform to the format expected by Intel's IOMMU, with the data field set to 0 and the address field comprising the generic code 0xFEE and the index of the selected IRT entry configured in step 24. This can be constructed using the following operation:
   - 0xFEE << 20 | *intel code in the first part of the address.*
   - ((IRTE-INDEX & 0x8000) >> 15) << 2 | *to place the most significant bit of the selected IRTE index in the position of the bit number 2.*
   - (IRTE-INDEX & 0x7FFF) << 5 | *to place the least significant bits of the selected IRTE index.*
   - 1 << 4 *to set the "Interrupt Format" to "Interrupt remappable" at the position of the bit number 4.*
   - Wherein :
      - >> n : shift right by n bits
      - << n : shift left by n bits
      - | : bitwise OR
- Finally, the driver of the PCle device 13 must inform the PCle device 13 of the selected entry number of MSI-X table to use to raise an interrupt to the user process A.

Once the initialization phase is complete, that is once the steps 21 to 25 have been performed, an interrupt can be raised in an execution phase.

In a step 26 of the method 2, an interrupt request is generated and sent by the PCle device 13. Such a generation and sending happens in response to a detection, by the PCle device 13, of an event occurring, which should lead to interrupting the user process A. In a standard such as BXI, this can be performed by detecting that a new event has been added to the user's event queue. BXI, or Bull eXascale Interconnect^{®}, is a high-performance computing (HPC) interconnect standard developed by Bull. The event queue is a data structure used to store and manage events that need to be processed by the user process. When a new event, such as a network packet arrival or a completion signal, is added to this queue, it indicates that the user process needs to handle this event. The PCle device 13, implementing BXI, monitors the event queue for new entries and triggers an interrupt to notify the user process that there is an event requiring its attention.

Examples of events that could lead to interrupting a process, include hardware timer expiration, where a timer reaches its limit, triggering an interrupt to perform scheduled tasks; I/O completion, such as the completion of a read or write operation to a disk or other storage device, signaling that data is ready for processing; sensor data availability, where new data from a connected sensor, like temperature or motion sensors, requires processing; power management events, involving changes in power state, such as transitioning to or from a low-power mode, necessitating adjustments in system operations; and user input, from devices like keyboards or mice, requiring the system to process user commands or interactions.

When the PCle device 13 is a network interface card, the detected events are network events. A network event is for example the reception of data but can also be for example an information related to the end of transmission of data by the network interface card 13 or an acknowledgment of another process in response to the user process A sending data to said other process. A network event is detected when an event is added to the event queue of the network interface card 13 mentioned previously, that is an event queue to which the user-level process interrupt is attached. The detected network events are network events which need an interrupt of the user process A for the user process A to process the network event. Thus, when a network event is detected, an interrupt request associated with the received network event is generated. In other embodiments of the inventions, the events are not network events, or are not only network events. Any event can be detected and lead to interrupting the user process A. This is even emphasized when the PCle device 13 is not a network interface card 13 and can handle different types of events than network events.

During the initialization phase, in step 25, the PCle device 13 has associated the user process A to interrupt with an entry in the MSI-X table maintained by the PCle device 13. When implementing BXI, this index is associated with the user's event queue.

Therefore, the device can raise a hardware interrupt, which can be a MSI-X interrupt in the present case, as described in the PCI-E standard. Raising a hardware interrupt involves writing to the PCIe data field at the address indicated in the MSI-X entry configured in step 25, that is the index of the IRT entry of the interrupt remapping table IRT of the IOMMU 12.

In a step 27, the IOMMU 12 receives this interrupt request and decodes the address to determine the IRTE index to use. The IOMMU 12 thus retrieves the IRT entry configured in step 24, as the interrupt mapped in the interrupt remapping table IRT of the IOMMU 12 has been assigned to the PCle device 13 and has been used by said PCle device 13 to raise an interruption towards the user process A. For example, as represented in Figure 4, the IOMMU retrieves the index 2 of the interrupt remapping table IRT, that is IRT(2). Since the IRT entry of index 2 was configured in "Posted" mode in step 24, the IOMMU 12 reads the PID structure in memory that was configured in steps 21 and 23, accessible at the address comprised in the PDA field of the entry of index 2, filled in step 24.

When receiving the interrupt request from the PCle device 13, the IOMMU 12 modifies atomically the PID structure of the union U1. This means that the IOMMU 12 performs these modifications in a single, indivisible operation, ensuring that no other processes can interfere during the update. The IOMMU 12 activates the "outstanding" bit of the PID structure of the union U1, which is activated when a notification to interrupt is outstanding, meaning that an interrupt request has been issued but not yet processed. By setting the outstanding bit, the IOMMU 12 indicates that an interrupt is pending. The IOMMU 12 then uses the value of the VV field ("Virtual Vector") of the IRT entry (in the taken example, this value is 64 as chosen in step 24) to modify the corresponding bit in the PIR field, that is in the PIR field of index 64. The value from the VV field is the user vector corresponding to the received interrupt request, and this value is then used to set the appropriate bit in the PIR field ("Posted Interrupt Request"), which tracks pending interrupts.

The IOMMU 12 then retrieves from the PID structure of the union U1 the "Notification Destination Target physical APIC ID" field and the "Notification Vector" field, to obtain respectively an identifier of the APIC 11 to reach and a notification vector for the APIC 11 to know which interrupt to raise, as set respectively in steps 21 and 23. The IOMMU 12 can then raise an interrupt to the target APIC 11 with the correct interrupt vector number in the step 27. In the invention, the PID structure has been filled with an identifier of the APIC to interrupt, for the IOMMU 12 to handle the interruption as if it were a hardware interrupt, as the IOMMU 12 received a hardware interrupt. In the prior art, on the contrary, a UPID structure would have been filled with such an identifier, as the interrupt is a user-level interrupt to raise by an APIC, but the IOMMU 12 would have not been able to handle such a user-level interrupt. As the invention comprises raising a user-level interrupt by a PCIe device, the PCle device raises a hardware interrupt, which is handled as a hardware interrupt by the IOMMU 12. The IOMMU 12 thus uses a PID structure. But, to raise a user-level interrupt, the APIC 11 uses a UPID structure, which is why the invention proposes to use the two structures in a union of structures U1.

In step 28, the APIC of the processor 11 receives the request from the IOMMU 12, compares the interrupt vector number with the value present in the UINV values field of the MSR IA32_UINTR_MISC, and deduces that it is a user interrupt as both values match, for example because they are equal. The APIC of the processor 11 then uses a UPID structure.

The APIC of the processor 11 atomically modifies the UPID structure of the union U1: the active bits of the PIR field corresponding to the user vector received, for example 0, are moved to the Request Register IA32_UINTR_RR , and the outstanding bit of the UPID structure is reset. It should be noted here that the outstanding bit of the UPID structure is not in the same place as the outstanding bit of the PID structure, so the outstanding bit of the PID structure remains active, meaning that no interrupt can be raised later in time as the system believes that a hardware interrupt is still outstanding. In our case, the IOMMU 12 had retrieved virtual interrupt vector 64 of the PID structure; in the UPID format, it is now user vector 0, as the PIR (Posted-interrupt request) starts at index 64 and ends at index 127 in the UPID structure, and the PIR starts at index 0 and ends at index 255 in the PID structure.

As the APIC retrieved user vector 0, it can raise the user-level interruption associated with said retrieved user vector. The processor 11 then interrupts the process in step 29, saves the execution context, retrieves the address of the interrupt handler from the MSR IA32_UINTR_HANDLER, and starts its execution in the application interrupt context. The user handler can then check the cause of the interrupt and respond accordingly. In the case of BXI, the handler will read the event from the event queue, process it, and acknowledge the interrupt at the BXI network interface card level.

A final issue that arises in the invention is that the outstanding bit of the PID structure is still set after having handled an interrupt. The outstanding notification field of the PID structure thus needs to be reset. This can be done by three different means, as will now be explained.

In a first embodiment, the PID structure of the union of structures U1 is mapped into user space. This allows the user process A to directly access the memory region of the PID structure of the union of structures U1 and to reset the outstanding notification field of the PID structure when the interrupt has been handled by the user process A. Thus, the IOMMU 12 will be able to issue a new interrupt in the future. This can be performed with the following steps:
- The user process requests the mapping of this memory region using a system call such as mmap() to the device driver of the network interface card.
- The operating system creates a 4KB virtual address space.
- The device driver maps this virtual address space to the union of structures U1.

This allows the user process A to directly access the memory region of the PID structure of the union of structures U1 and to reset, using the registered handler, the outstanding notification field of the PID structure when the interrupt has been handled by the user process A. Thus, the IOMMU 12 will be able to issue a new interrupt in the future.

In a second embodiment, the user process A can use a system call which, when called, lead to a reset, by the operating system, of the outstanding notification field of the PID structure of the union of structures U1. Such a system call can be created specifically for the invention.

In a third embodiment, the user process A asks the PCle device 13 to reset the outstanding notification field of the PID structure of the union of structures U1. To do so, the PID structure is passed over to the PCle device 13, and, after having handled an interrupt, the PCle device 13 resets the outstanding notification field of the PID structure of the union of structures.

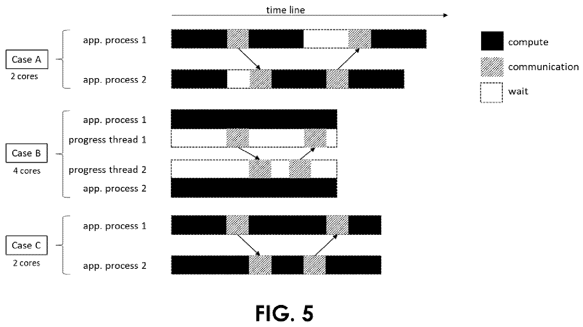

The solution of the invention allows to finely interleave the computation of user process A with event handling. This is schematically represented in Figure 5. Contrary to the traditional mechanisms where the user process A would explicitly wait for events (case A), the invention ensures that events are processed by the processor 11 and the user process A as soon as they happen and without wait time preparation, which offers a maximal overlap of computation with other events, such as network communication (case C). This also enables to avoid using a communication thread (case B) and thus avoids using another processor core. In conclusion, this solution permits to reduce global execution time of the application while avoiding additional core usage.

In a preferred embodiment, when the processor 11 does not execute the user process A, the processor 11 remains in a low-power state, as opposed to the state of the art where the processor 11 would have to perform polling of a memory to verify if network communications are oncoming or to be in a low-power mode but awaken by the operating system OS1. In this embodiment of the present invention, the processor 11 is in a low-power mode and it can be awaken by a user-level process interrupt, for example transformed from a hardware interrupt sent by the network interface card 13. That way, the processor 11 can execute the user process A with data received during the network communication, without having waited in a power-consuming mode and without resorting to the operating system OS1.

## Claims

1. Method (2) for interrupting a user process (A) in a computer, the method (2) being performed by the computer, the computer comprising at least a processor (11) to execute the user process (A), at least one Peripheral Component Interconnect Express "PCIe" device (13) and at least one Input/Output Memory Management Unit "IOMMU" (12), the method (2) comprising:
- Allocating (21) a memory region to store a union of structures, the union of structures comprising a Posted-Interrupt Descriptor "PID" structure and a User Posted-Interrupt Descriptor "UPID" structure, an entry of the PID structure being associated with the processor (11) and corresponding to an interrupt vector;
- Executing (22) by the processor (11), the user process (A);
- Registering (23), by the user process (A), a user interrupt handler,
- Configuring (24) the IOMMU (12) with a remapping interrupt table (IRT) comprising associating an entry of the remapping interrupt table (IRT) with an address of the memory region of the union of structures and with an index of said union of structures;
- sending (26) a hardware interrupt request towards the processor (11) by the PCIe device upon occurrence of an event, the hardware interrupt request being associated with the entry of the remapping interrupt table (IRT);
- receiving (27), by the IOMMU, the hardware interrupt request and accessing the corresponding entry in the remapping interrupt table to access the PID structure of the union of structures and retrieve the interrupt vector;
- sending (27), by the IOMMU towards the processor (11), an interrupt request comprising the retrieved interrupt vector,
- receiving (28), by the processor (11) the interrupt request, matching the interrupt vector with the UPID structure of the union of structures and interrupting (29), by the processor (11), the user process (A) using the registered interrupt handler of the UPID structure.

2. Method (2) according to the preceding claim wherein the index of said union of structures (U1) comprised in the interrupt remapping table (IRT) of the IOMMU (12) corresponds to a field of the PID structure of the union of structures (U1) and to a field of the UPID structure of the union of structures.

3. Method (2) according to any of the preceding claims further comprising assigning (25) the interrupt specified in the selected entry of the interrupt remapping table (IRT) to the PCle device (13).

4. Method (2) according to any of the preceding claims wherein each of the PID structure and UPID structure of the union of structures (U1) comprises an outstanding notification field, the method (2) comprising:
- Setting the outstanding notification field in the PID structure, by the IOMMU (12), after retrieving the interrupt vector, indicating that a hardware interrupt is pending.

5. Method (2) according to claim 4 further comprising resetting, by the processor (11), the outstanding notification field in the UPID structure of the union of structures (U1) upon using the registered interrupt handler of the UPID structure.

6. Method (2) according to any one of claim 4 or 5 further comprising resetting the outstanding notification field in the PID structure of the union of structures (U1) upon completion of the interrupt handling by the user process.

7. Method (2) according to claim 6 wherein resetting the outstanding notification field in the PID structure of the union of structures (U1) comprises using a system call by the user process (A).

8. Method (2) according to claim 6 wherein resetting the outstanding notification field in the PID structure comprises mapping the PID structure of the union of structures into the address space of the user process (A) and resetting the outstanding notification field in the PID structure by the user process (A).

9. Method (2) according to claim 6 wherein resetting the outstanding notification field in the PID structure comprises using a hardware mechanism of the PCle device.

10. Method (2) according to any of the preceding claims wherein the PID structure comprises a target processor field specifying the processor.

11. System (1) configured to implement the method (2) according to any one of the preceding claims, the system (1) comprising at least:
- a device (10) comprising:
∘ the PCle device (13),
∘ the processor (11),
∘ a memory (11),
∘ an IOMMU (12),
- the PCle device (13) and the IOMMU (12) being communicatively coupled to transmit at least the hardware interrupt request,
- the processor (11) and the IOMMU (12) being communicatively coupled to transmit at least the user-level interrupt request.

12. System (1) according to claim 10 wherein the PCle device is a network interface card and the event is a network event.

13. System (1) according to claim 10 or 11 wherein the system (1) is a high-performance computer comprising at least one cabinet and wherein the device (10) comprising the processor (11) and the first memory (11) is a compute node comprised in a compute blade comprised in the at least one cabinet.

14. A computer program product comprising instructions which, when the program is executed by the system (1) according to any one of claims 11 to 13, cause the system (1) to carry out the method (2) according to any of claims 1 to 10.

15. A computer-readable medium having stored thereon the computer program product of claim 14.
